# EUROPEAN PATENT SPECIFICATION

(11) **EP 4 098 667 B1**
(45) Date of publication and mention of the grant of the patent: **12.03.2025**
(21) Application number: 20916328.6
(22) Date of filing: 29.01.2020
(51) Int. Cl.: C08F 36/04, C08F 36/06, C08F 136/06, C08F 4/52, C08F 4/44, C08F 4/42, C08K 5/5415, C08C 19/25, C08C 19/44, C08L 15/00, C08L 9/00

(54) **METHOD FOR PRODUCING MODIFIED POLYDIENES**
VERFAHREN ZUR HERSTELLUNG VON MODIFIZIERTEN POLYDIENEN
PROCÉDÉ DE PRODUCTION DE POLYDIÈNES MODIFIÉS

(43) Date of publication of application: 07.12.2022
(73) Proprietor: Public Joint Stock Company "Sibur Holding" (PJSC "Sibur Holding"), Tobolsk, 626150 (RU)
(72) Inventor: IARTSEVA, Tatiana Aleksandrovna, Voronezh, 394033 (RU); LAGUNOVA, Svetlana Alekseevna, Voronezh, 394029 (RU); ARTEMEVA, Olga Ivanovna, Voronezh, 394008 (RU)
(74) Representative: Peters, Andreas
(86) International application number: PCT/RU2020/000042
(87) International publication number: WO 2021/154112

(56) References cited:
- EP-A1- 1 972 644
- GB-A- 2 101 616
- RU-C1- 2 675 540
- RU-C2- 2 392 284
- US-A1- 2010 216 956

## Description

### TECHNICAL FIELD

The invention relates to the production of synthetic rubbers used in the manufacture of tires and tire parts, golf balls and rubber technical products.

In particular, the present invention relates to a method for producing a modified polydiene by polymerization of a conjugated diene in an organic solvent by using a modified catalyst complex including a lanthanide, an organoaluminum compound, a halogen-containing component, and a maleinized low molecular weight polybutadiene, followed by post-polymerization modification using at least one oligomeric silicate.

The present invention also relates to modified polydiene-based rubber mixtures.

### BACKGROUND

Patent RU2569673 discloses a method for producing a polydiene by polymerization of a conjugated diene in the presence of an active catalyst and an amine, where the amine is introduced before 5% of the conjugated diene monomer is polymerized. This technique provides a polydiene with a reactive chain end. In addition, this method includes a variant of an additional step of reacting a functionalizing agent with said reactive chain end.

The amine is introduced to reduce the risk of runaway polymerization and reactor fouling.

However, the presence of an amine in the catalyst complex leads to the formation of a precipitate that prevents the polymerization reaction from proceeding. In addition, one of the components of the catalyst complex is methylaluminoxane, which is characterized by poor storage stability, increases the ash content of the polymer, and, in addition, is an expensive compound.

The active center (together with the growing macromolecule) is known to react with carbonyl groups during post-polymerization and polymerization modification with maleic fragments, which leads to a change in molecular parameters and plastoelastic properties of polybutadienes. At the same time, new phenomena have been discovered. In particular, when a modifier is added directly to the finished catalyst complex (polymerization modification), the modifier not only interrupts the polymerization process, but also provides results that, according to the author of an article, may be considered as close to post-polymerization modification (V.L. Zolotarev, On the mechanism of post-polymerization modification of neodymium 1,4-cis-polybutadiene, "Vysokomolekulnye soedinenie", No. 3, 2015, pp.8-10).

However, the article comprises no information on the mechanism of polymer modification when the above catalyst complex is used, and no information on which of the properties of the polymer have been improved. In addition, it is evident that the use of maleinized polybutadiene alone for modification, regardless the time of its introduction, does not provide a polymer with improved processability and manufacturability.

US7112632 discloses a method for producing a low branch content polybutadiene. The proposed method includes: (a) polymerization of butadiene; (b) treatment of the polymer solution obtained upon completion of stage (a) with a coupling agent selected from: (i) polyunsaturated natural oils; (ii) butadiene and/or isoprene oligomers; (iii) butadiene and/or isoprene copolymers with vinylarene monomers; the unsaturated bonds present in compounds (i)-(iii) being at least partially substituted with groups selected from epoxides, anhydrides and esters; (c) recovery of the low branch content polybutadiene obtained upon completion of stage (b).

However, the implementation of the technical solution according to this patent, i.e. terminal post-polymerization modification, leads to a high consumption of maleinized polybutadiene.

Patent US6624256 provides a method for preparation of siloxane-functionalized high 1,4-cis polybutadiene. The method comprises polymerization of 1,3-butadiene and subsequent modification with a siloxane compound represented by formulas I or II: 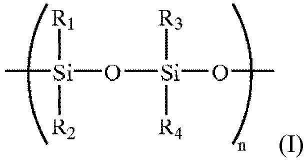 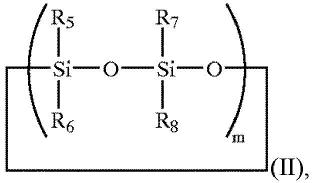 where R₁-R₈ are the same or different and include halogen, or C₁-C₂₀ alkyl or aryl group, and n and m are integer of 1 to 20.

US6624256 demonstrates that the use of silicon-containing substances (I and II) as a modifier provides polybutadiene with high abrasion resistance, but the resulting rubber is characterized by a high polydispersity value, which negatively affects the properties of rubbers produced from them.

The method, which is closest in technical essence and the achieved result, is a process for the preparation of nano-structured polymers based on conjugated dienes, provided in patent RU2475503. According to the patent, nano-structured polymers based on conjugated dienes are prepared in the presence of catalysts based on rare earth metal compounds, followed by reaction with a nano-coupling agent. The nano-coupling agents are oligomeric silicates of the formula:

X₃-Si-(O-SiX₂)ₙ-X,

where X is an alkoxy group of the formula OR, where R is a saturated or unsaturated aliphatic hydrocarbon residue having from 1 to 30 carbon atoms, a cycloaliphatic hydrocarbon residue having from 5 to 30 carbon atoms, or an aromatic hydrocarbon residue having from 6 to 30 carbon atoms, and n is an integer greater than 0, preferably greater than 1, particularly preferably greater than 2.

In addition, according to patent RU2475503, the nano-coupling agents can be introduced into the reaction system at any time depending on desired properties of polymers to be produced.

The disadvantage of this invention is a wide polydispersity of the rubbers produced by this process, which negatively affects the properties of rubbers produced from them.

### SUMMARY

The use of polybutadiene with a linear stereoregular structure makes it possible to obtain rubber mixtures for tires with high physical and mechanical properties (strength, elastic-hysteresis properties (AHS), abrasion, wear resistance, etc.), but at the same time, such polybutadienes are characterized by high viscosity, which negatively affects the processability of rubber mixtures, and high cold flow, which causes problems with isolation and storage of the polymer.

The objective of the present invention is to reduce cold flow values of the polymer and improve the processability of rubber mixtures.

The objective is addressed by a method for producing a modified polydiene (preferably polybutadiene), which comprises the following steps: 1) preparing a catalyst complex including a lanthanide compound, an organoaluminum compound, a halogen-containing component, and a conjugated diene; 2) reacting the catalyst complex prepared in step 1) with a maleinized low molecular weight polybutadiene to produce a modified catalyst complex; 3) subjecting the conjugated diene to polymerization in an organic solvent in the presence of the catalyst complex produced in step 2); and 4) subjecting the resulting polydiene to post-polymerization modification using at least one oligomeric silicate.

The technical result of the present invention is the production of a modified (branched and functionalized) stereoregular polydiene characterized by a narrow molecular weight distribution and a low cold flow. Another result of the invention is the production of rubber mixtures characterized by uniform filler distribution and demonstrating improved manufacturability (low Mooney viscosity) and tear resistance.

According to the present invention, the production of a modified polydiene involves the use of at least two modifying agents, which are in particular maleinized low molecular weight polybutadienes (hereinafter - MPBs) used to modify the catalyst complex and oligomeric silicates used for post-polymerization treatment of the polymerizate.

The MPBs used according to the invention are an adduct of maleic anhydride and a polybutadiene, comprising from 4 to 24 wt.% anhydride groups based on the total weight of maleinized polybutadiene, and have a molecular weight of 1200 to 15000 g/mol. Polybutadienes with a molecular weight of more than 15,000 g/mol are not low molecular weight compounds; MPBs with a molecular weight of less than 1200 g/mol are currently unknown. The content of anhydride groups is indicated by reference to the currently existing MPBs; however, the content of anhydride groups of more than 24 wt.% is theoretically acceptable.

In some embodiments, MPBs can be characterized by a content of anhydride groups of 4 to 20 wt.% and a molecular weight of 1200 to 8000 g/mol.

In a preferred embodiment, used MPBs comprise from 5 to 13 wt.% of anhydride groups and have a molecular weight of 2500 to 5500 g/mol.

A modified catalyst complex is produced by reaction of MPB with a prepared catalyst complex which includes a lanthanide compound, an organoaluminum compound, a halogen-containing component, and a conjugated diene. This reaction can be carried out in two ways: by introduction of MPB directly into the prepared catalyst complex or by introduction of MPB into charge stock (monomer solution) before the addition of the active catalyst complex. It was unexpectedly found that when the catalyst complex is fed into the charge stock comprising MPB previously introduced therein, the catalyst complex interacts with the MPB to form a modified catalyst complex. A cyclic associate is assumed to be formed in the modified catalyst complex in this case, which has several active sites where the growth of the polymer chain is further possible. According to the authors of the present invention, this provides a branched polymer.

To obtain a modified catalyst complex, MPB is used in an amount of at least 0.01 mol per 1 mol of lanthanide. Preferably, the MBP is used in a molar ratio of (0.01-5):1 per lanthanide. The exact dosages of the introduced polybutadiene depend on various factors, including the activity of the catalyst complex and desired properties of the resulting product. It was found that this ratio allows the production of polydiene with optimal low cold flow values and a narrow molecular weight distribution. The mole ratio of 0.1 to 1.00 of MPB per 1 mole of lanthanide is most preferable.

With an increase in the MPB dosage over 5 mol per 1 mol of lanthanide, the polymerization process slows down. A reduction of the MPB dosage below the specified levels does not lead to an improvement in the polymer properties and is not therefore advisable.

Oligomeric silicates used in the post-polymerization treatment have the general formula:
X3-Si-(O-SiX2)n-X, where X is an alkoxy group of the formula OR, where R is a saturated or unsaturated aliphatic hydrocarbon residue comprising 1 to 30 carbon atoms, a cycloaliphatic hydrocarbon residue comprising 5 to 30 carbon atoms, or an aromatic hydrocarbon residue comprising 6 to 30 carbon atoms, and n is an integer greater than 0, preferably greater than 1, particularly preferably greater than 2.

The most preferred compounds according to the claimed method are compounds of formulas:

(RO)₃Si-O-Si(OR)₃,

(RO)₃Si-O-Si(OR)₂-O-Si(OR)₃,

(RO)₃Si-O-Si(OR)₂-O-Si(OR)₂-O-Si(OR)₃,

(RO)₃ Si-O-Si(OR)₂-O-Si(OR)₂-O-Si(OR)₂-O-Si(OR)₃,

(RO)₃Si-O-Si(OR)₂-O-Si(OR)₂-O-Si(OR)₂-O-Si(OR)₂-O-Si(OR)₃

or

(RO)₃Si-O-Si(OR)₂-O-Si(OR)₂-O-Si(OR)₂-O-Si(OR)₂-O-Si(OR)₂-O-Si(OR)₃,

where R is methyl, ethyl, vinyl, propyl, isopropyl, butyl, isobutyl, pentyl, isopentyl, hexyl, isohexyl, octyl, or isooctyl.

Examples of commercially available oligomeric silicates can be ethyl polysilicate (silicon ether) of the formula (OEt)₃-Si-(O-Si(OEt)₂)ₙ-OEt, where n is an integer from 2 to 3, with a SiO₂ content of 40 to 42%; oligomeric vinylsilanes; oligomeric siloxane comprising vinyl and methoxy groups, with a SiO₂ content of 54%; oligomeric siloxane comprising vinyl and ethoxy groups, with a SiO₂ content of 45%, oligomeric siloxane comprising vinyl, propyl, and ethoxy groups.

The content of oligomeric silicates used according to the invention per 1 kg of polymer can be from 0.01 to 50 g. It is preferable to use from 0.5 g to 10 g per 1 kg of polymer. These dosages allow the preparation of polydiene with optimal values of plasticity and cold flow; rubber mixtures based on these polymers are characterized by uniform filler distribution in the rubber matrix and high strength properties.

With an increase in the proposed dosage, a jump in Mooney viscosity is observed and polydispersity widens, which is acceptable for a potential polymer consumer in some cases, and unacceptable in others, and depends on the field and methods of application of the resulting polymer. With a decrease in dosages of oligomeric silicates, changes in the entire complex of rubber properties are insignificant.

The mechanism of modification by oligomeric silicates is such that they enter into reaction with "living" ends of the polymer, and at the step of degassing, the groups of oligomeric silicates react with each other, and the condensation results in the formation of high-molecular structures.

To obtain the catalyst complex according to the invention, compounds that can be used as lanthanide compounds comprise at least one atom of a lanthanide selected from the group consisting of lanthanum, neodymium, cerium, praseodymium, promethium, samarium, europium, gadolinium, terbium, dysprosium, holmium, erbium, thulium, ytterbium, and lutetium. It is preferable to use neodymium.

Lanthanide-containing compounds include, but are not limited to, carboxylates, organophosphates, organophosphonates, organophosphinates, carbamates, dithiocarbamates, xanthogenates, β-diketonates, halides, oxyhalides, and alcoholates.

Neodymium carboxylates include neodymium formate, neodymium acetate, neodymium acrylate, neodymium methacrylate, neodymium valerate, neodymium gluconate, neodymium citrate, neodymium fumarate, neodymium lactate, neodymium maleate, neodymium oxalate, neodymium 2-ethylhexanoate, neodymium neodecanoate (trade name neodymium versatate), neodymium naphthenate, neodymium stearate, neodymium oleate, neodymium benzoate and neodymium picolinate.

Neodymium organophosphates include neodymium dibutyl phosphate, neodymium diphenyl phosphate, neodymium dihexyl phosphate, neodymium diheptyl phosphate, neodymium dioctyl phosphate, neodymium bis(1-methylheptyl)phosphate, neodymium bis(2-ethylhexyl)phosphate, neodymium didecyl phosphate, neodymium dodecyl phosphate, neodymium dioctadecyl phosphate, neodymium bis(n-nonylphenyl)phosphate, neodymium butyl(2-ethylhexyl)phosphate, neodymium (1-methylphenyl)(2-ethylhexyl)phosphate, and neodymium (2-ethylhexyl)(n-nonylphenyl)phosphate.

Neodymium organophosphonates include neodymium butyl phosphonate, neodymium pentyl phosphonate, neodymium hexyl phosphonate, neodymium heptyl phosphonate, neodymium octyl phosphonate, neodymium (1-methylheptyl)phosphonate, neodymium (2-ethylhexyl)phosphonate, neodymium decyl phosphonate, neodymium dodecyl phosphonate, neodymium octadecyl phosphonate, neodymium oleyl phosphonate, neodymium phenyl phosphonate, neodymium (n-nonylphenyl)phosphonate, neodymium butyl(butylphosphonate), neodymium pentyl(pentylphosphonate), neodymium hexyl(hexylphosphonate), neodymium heptyl(heptylphosphonate), neodymium octyl(octylphosphonate), neodymium (1-methylheptyl)((1-methylheptyl)phosphonate), neodymium (2-ethylhexyl)((2-ethylhexyl)phosphonate, neodymium decyl(decylphosphonate), neodymium dodecyl(dodecylphosphonate), neodymium octadecyl(octadecylphosphonate), neodymium oleyl(oleylphosphonate), neodymium phenyl(phenylphosphonate), neodymium (n-nonylphenyl)((n-nonylphenyl)phosphonate), neodymium butyl(2-ethylhexyl)phosphonate, neodymium (2-ethylhexyl)(butylphosphonate), neodymium (1-methylheptyl)(2-ethylhexyl)phosphonate, neodymium (2-ethylhexyl)((1-methylheptyl)phosphonate), neodymium (2-ethylhexyl)((n-nonylphenyl)phosphonate), and neodymium (p-nonylphenyl)((2-ethylhexyl)(phosphonate).

Neodymium organophosphinates include neodymium butyl phosphinate, neodymium pentyl phosphinate, neodymium hexyl phosphinate, neodymium heptyl phosphinate, neodymium octyl phosphinate, neodymium (1-methylheptyl)phosphinate, neodymium (2-ethylhexyl)phosphinate, neodymium decylphosphinate, neodymium dodecylphosphinate, neodymium octadecylphosphinate, neodymium oleylphosphinate, neodymium phenylphosphinate, neodymium (n-nonylphenyl)phosphinate, neodymium dibutyl phosphinate, neodymium dipentyl phosphinate, neodymium dihexyl phosphinate, neodymium diheptyl phosphinate, neodymium dioctyl phosphinate, neodymium bis(1-methylheptyl)phosphinate, neodymium bis(2-ethylhexyl)phosphinate, tris-[bis(2-ethylhexyl)phosphate]neodymium, neodymium didecyl phosphinate, neodymium didodecyl phosphinate, neodymium dioctadecyl phosphinate; neodymium dioleyl phosphinate, neodymium diphenyl phosphinate, neodymium bis(n-nonylphenyl)phosphinate, neodymium butyl(2-ethylhexyl)phosphinate, neodymium (1-methylheptyl)(2-ethylhexyl)phosphinate, and neodymium (2-ethylhexyl)(n-nonylphenyl)phosphinate.

The use of neo-acid carboxylates is most preferable. The structure of neo-acids comprise a trialkyl carboxylic acid (branched α,α'-carboxylic acid) moiety. Neo-acid derivatives, which are more soluble in hydrocarbon solvents, are alkylated faster and more completely, which leads to the formation of more active catalyst compounds.

It is preferable to use neodymium carboxylates and phosphates, wherein tris-[bis(2-ethylhexyl)phosphate]neodymium, neodymium neodecanoate, tris-[(2-ethyl)hexanoate]neodymium, gadolinium versatate, or praseodymium versatate are most preferable.

The organoaluminum compounds which can be used in the method according to the present invention include trialkylaluminum, triphenylaluminum or dialkylaluminum hydrides, alkylaluminum dihydrides and mixtures thereof, in particular trimethylaluminum, triethylaluminum, tri-*n*-propylaluminum, triisopropylaluminum, tri-n-butylaluminum, triisobutylaluminum, tri-*tert*-butylaluminum, triphenylaluminum, trihexylaluminum, tricyclohexylaluminum, trioctylaluminum, diethylaluminum hydride, di-*n*-propylaluminum hydride, di-*n*-butylaluminum hydride, diisobutylaluminum hydride, dihexylaluminum hydride, diisohexylaluminum hydride, dioctylaluminum hydride, diisooctylaluminum hydride, phenylethylaluminum hydride, phenyl-*n-*propylaluminum hydride, phenylisopropylaluminum hydride, pfenyl-n-butylaluminum hydride, phenylisobutylaluminum hydride, benzylethylaluminum hydride, benzyl-*n-*butylaluminum hydride, benzylisobutylaluminum hydride, benzylisopropylaluminum hydride, etc. and mixtures thereof.

The use of aluminum alkyls or alkylaluminum hydrides or mixtures thereof are preferable.

Triethylaluminum, triisobutylaluminum, diisobutylaluminum hydride or mixtures thereof are most preferable.

The conjugated dienes which can be used in the method according to the invention include 1,3-butadiene, isoprene, 2,3-dimethyl-1,3-butadiene, 1,3-pentadiene (piperylene), 2-methyl-3-ethyl-1,3-butadiene, 3-methyl-1,3-pentadiene, 2-methyl-3-ethyl-1,3-pentadiene, 3-methyl-1,3-pentadiene, 1,3-hexadiene, 2-methyl-1,3-hexadiene, 1,3-heptadiene, 3-methyl-1,3-heptadiene, 1,3-octadiene, 3-butyl-1,3-octadiene, 3,4-dimethyl-1,3-hexadiene, 4,5-diethyl-1,3-octadiene, phenyl-1,3-butadiene, 2,3-diethyl-1,3-butadiene, 2,3-di-n-propyl-1,3-butadiene, 2-methyl-3-isopropyl-1,3-butadiene.

1,3-Butadiene, isoprene, piperylene are most preferable as conjugated dienes.

Compounds which can be used as a halogen-containing component include dimethylaluminum chloride, diethylaluminum chloride, diisobutylaluminum chloride, dimethylaluminum bromide, diethylaluminum bromide, diisobutylaluminum bromide, dimethylaluminum fluoride, diethylaluminum fluoride, diisobutylaluminum fluoride, dimethylaluminum iodide, diethylaluminum iodide, diisobutylaluminum iodide, methylaluminum dichloride, ethylaluminum dichloride, methylaluminum dibromide, ethylaluminum dibromide, methylaluminum difluoride, ethylaluminum difluoride, methylaluminum sesquichloride, ethylaluminum sesquichloride, isobutylaluminum sesquichloride, as well as trimethyltin chloride, trimethyltin bromide, triethyltin chloride, triethyltin bromide, di-*tert*-butyltin dichloride, di-*tert*-butyltin dibromide, dibutyltin dichloride, dibutyltin dibromide, tributyltin chloride and tributyltin bromide and the like.

The use of ethylaluminum sesquichloride, ethylaluminum dichloride or diethylaluminum chloride as a halogen-containing compound is preferable.

In one embodiment of the invention, a catalyst complex used for polymerization comprises (A) a lanthanide compound, (B) an organoaluminum compound, (C) a conjugated diene, and (D) a halogen-containing component at a (A):(B):(C):(D) molar ratio equal to 1:(8-30):(5-30):(1.5-3.0).

The preferred molar ratio of the components in the catalyst complex is (A):(B):(C):(D) = 1:(8-20):(5-20):(1.8-2.8).

The most preferred molar ratio of the components in the catalyst complex is (A):(B):(C):(D) = 1:(10-15):(10-15):(2.1-2.5).

The polymerization solvent is an inert organic solvent (inert solvents that do not have a pronounced proton affinity and are not able to donate their protons, and do not change acidic, basic or amphoteric properties of chemical compounds dissolved in them), including aliphatic hydrocarbons used individually or in mixtures with each other, in particular such as butane, pentane, hexane, heptane; alicyclic hydrocarbons, namely cyclopentane, cyclohexane; mono-olefins, such as 1-butene, 2-butene, or mixtures thereof; aromatic hydrocarbons, in particular such as benzene, toluene, xylene.

According to the proposed method, the most preferred solvent is a hydrocarbon solvent, which is a cyclohexane:hexane mixture or a cyclohexane:nefras (industrial hexane-heptane paraffin hydrocarbon fraction of dearomatized catalytic reforming gasoline with boiling point limits between 65 and 75°C) mixture at a ratio of (30-55)÷(70-45).

The process of preparing polydiene is carried out batchwise or continuously in a hydrocarbon solvent by feeding the reactor/autoclave with a hydrocarbon charge stock consisting of a monomer and a solvent, and a catalyst complex pre-mixed with the solvent, comprising a lanthanide compound, an organoaluminum compound, a conjugated diene, and a halogen-containing organic compound. The monomer concentration in the solvent is typically from 7 to 15% by weight, preferably from 9 to 13%. A concentration below 7% leads to a decrease in the energy efficiency of the process, whereas a concentration above 15% leads to an increase in the polymerizate viscosity and, consequently, an increase in the energy consumption during isolation and drying of rubber.

The catalyst complex can be prepared by introducing an organoaluminum compound (most preferably triisobutylaluminum, triethylaluminum, diisobutylaluminum hydride or a mixture thereof), a lanthanide compound (most preferably a carboxylate, in particular, neodymium neodecanoate or tris-[bis-(2-ethylhexyl)phosphate]neodymium) into a solution of a conjugated diene (most preferably 1,3-butadiene) in an organic (preferably aliphatic) solvent; aging the resulting mixture for 2 to 20 hours at a temperature of 23±2°C, followed by the addition of a halogen-containing compound (most preferably ethylaluminum sesquichloride, ethylaluminum dichloride, diethylaluminum chloride or mixtures thereof), and aging the resulting mixture for 2 to 20 hours at a temperature of 23±2°C, followed by the addition of a branching agent, MPB, at a molar ratio of catalyst complex components, in particular (A) lanthanide, (B) organoaluminum compound, (C) conjugated diene, (D) halogen-containing component, (D) branching agent, (A):(B):(C):(D):(D), equal to 1:(8-30):(5-30):(1.5-3.0) (0.01-5.0).

The reaction of MPB with the catalyst complex is carried out with stirring for 3-150 minutes. A longer mixing time is not required since this time is sufficient for the formation of an active complex. The stirring is carried out at a temperature of from 20 to 60°C. Pressure is not required to be controlled. The polymerization process is carried out at a temperature of 40-80°C.

The time of polymerization can be from 1.5 to 2 hours. The monomer conversion reaches 95-99%.

After reaching the monomer conversion of 95-99%, a control sample is taken, and a modifier is fed into the remaining polymerizate - at least one oligomeric silicate. The resulting mixture is thoroughly stirred for 5 minutes to 5 hours at a temperature of 60-90°C. At a temperature below 60°C, the viscosity of the polymer will increase, which is undesirable because of inevitable difficulties in its isolation and processing. At the same time, the end groups of the polymer chain tend to lose their activity at a temperature above 90°C, and as a consequence it can be very difficult to achieve a high degree of modification of the polymer.

Oligomeric silicates react with the polymer at the active ends of its chain.

The time of modification may preferably be from 5 minutes to 5 hours, most preferably from 20 minutes to 1 hour.

Upon completion of the modification, the polymerization products are stabilized with an antioxidant solution in an amount of 0.2 to 0.4 wt.% per polymer and degassed with water. If during degassing the polymer is in contact with water, the macromolecules of oligomeric silicates attached to the polymer interact with each other, as well as with free macromolecules.

The Mooney viscosity of the rubber prepared according to the invention is from 37 to 45 arbitrary Mooney units before modification and from 40 to 66 arbitrary Mooney units after modification; the polydispersity index of the prepared polydienes is in the range of 2.16 to 2.6, cold flow is in the range of 5 to 40 mm/h, plasticity is in the range of 0.4 to 0.6, and elastic recovery is in the range of 1.1 to 1.8 mm.

Rubber mixtures based on the obtained polydienes are prepared according to standard formulations as presented in Table 3 and are characterized by low Mooney viscosity of the rubber mixtures and improved tear resistance.

In a particular embodiment of the invention, the method defined in any one of claims 1-14 is characterized in that:
- the preparation of the catalyst complex in step 1) is performed by introducing the organoaluminum compound and the lanthanide compound into a solution of the conjugated diene in the organic solvent, aging the resulting mixture for 2 to 20 hours at a temperature of 23±2°C, followed by addition of the halogen-containing compound to the thus-aged mixture, and aging the resulting mixture for 2 to 20 hours at a temperature of 23±2°C; and /or
- the maleinized low molecular weight polybutadiene with the catalyst complex in step 2) is performed at a temperature of from 20 to 60°C with stirring for 3-150 minutes; and/or
- the polymerization in step 3) is performed at a temperature of 40-80°C.

### DETAILED DESCRIPTION OF EMBODIMENTS OF THE INVENTION

Exemplary embodiments of the present invention are described below. One of ordinary skill in the art would appreciate that the invention is not limited only to the examples presented, and the same effect can be achieved in other embodiments without going beyond the essence of the claimed invention.

Test methods used to evaluate the properties of polymers prepared according to the claimed method are further described below.
1. The percentage of conversion was determined by precipitating a polymer from polymerizate with ethyl alcohol and drying the isolated polymer.
2. The molecular weight characteristics of rubbers were determined by gel permeation chromatography according to our own method using a Breeze gel chromatograph (Waters) equipped with a refractometric detector. Rubber samples were dissolved in freshly distilled tetrahydrofuran, the mass concentration of the polymer in the solution was 2 mg/ml, universal calibration was made using polystyrene standards. The calculation was performed using Mark-Kuhn-Houwink constant for polydiene (K = 0.000457, α = 0.693). Test conditions were as follows:
   - a set of 4 high-resolution columns (300 mm length, 7.8 mm diameter) packed with Styrogel, HR3, HR4, HR5, HR6, which allows the analysis of polymers with a molecular weight of 500 to 1*107 amu;
   - the solvent was tetrahydrofuran; flow rate was 1 cm³/min;
   - the temperature of the column thermostat and refractometer was 300°C.
3. Plastoelastic properties of rubbers (plasticity, cold flow) were determined according to GOST 19920.17 and GOST 19920.18 on a compressive plastometer with a thermostat, model GT7060SA.
4. Mooney viscosity ML 1+4 (100) was measured using a rotor-equipped device (produced by Alpha) for 4 minutes at 100°C (samples were preheated for 1 minute) according to ASTM D 1646.
5. The tear strength properties of rubbers were determined in accordance with GOST 262-93 on a Zwick/Roell/Z005 tensile testing machine.
6. The elastic component of the complex dynamic shear modulus G' (kPa), allowing the evaluation of the filler distribution in rubber mixtures and silanization of the filler, was determined on an Alpha Technologies RPA-2000 Rubber Process Analyzer at 0.1 Hz and 100°C in the deformation range of 1 to 450%. The difference between the accumulation modules at a deformation amplitude of 1% and 50% was calculated as follows: ΔG' = (G'_{1%} - G'_{43%}) - Payne effect.

### Example 1 (by prototype)

Polymerization was carried out under a nitrogen atmosphere under conditions excluding air and moisture. Dry and oxygen-free commercial hexane was used as a solvent. The polymerization was carried out in an autoclave with a working volume that, depending on the load, ranged from 2 to 20 liters.

Conversion was determined gravimetrically. For this, samples of a polymer solution were weighed immediately after sampling (they comprised the solvent and monomer) and after drying, which was carried out at 65°C in a vacuum oven.

Mooney viscosity ML 1+4 (100) was measured using an Alpha device equipped with a massive rotor for 4 minutes at 100°C (the samples were preheated for one minute).

A solution of diisobutylaluminum hydride [Al(C₄H₉)₂H, hereinafter referred to as DIBAG] in hexane, a solution of ethylaluminum sesquichloride [Al₂(C₂H₅)₃Cl₃, hereinafter referred to as EASC] in hexane in an equimolar amount to neodymium versatate, and a solution of neodymium versatate [NdV₃] in hexane were added with stirring to a solution of 1,3-butadiene (BD) in technical hexane in a concentration of 13 wt.%, loaded into a dry and nitrogen-filled 20L steel reactor. The reaction mixture was heated to 73°C. Upon completion of the polymerization (60 minutes after its start), a sample of polymer was taken. Then, a solution of a modifying reagent, which was ethyl polysilicate, polymerized tetraethyl orthosilicate with a SiO₂ content of 40-42% (A), in 100 ml of hexane was added with stirring using a burette. The amount of ethyl polysilicate was 13 g per 1 kg of polymer. The characteristics of the polymer samples before and after polymerization are shown in Table 1. After one hour, the reaction was stopped by adding 20 ml of water and the reaction products were stabilized by adding 2.6 g of Irganox 1520L stabilizer dissolved in 100 ml of hexane.

The polymer was precipitated with 10 liters of water-containing ethanol and dried at 60°C in a vacuum oven.

### Example 2

A catalyst complex including neodymium neodecanoate [NdV₃], butadiene (BD), diisobutylaluminum hydride (DIBAH), ethylaluminum sesquichloride (EASC) was prepared, in an aliphatic solvent, which was a mixture of cyclohexane/nefras in a mass ratio of 70/30. The ratio of components in the catalyst complex was BD:Nd:DIBAG:EASC = 10:1:10:2.3. The aging time of the complex was 22 hours at a temperature of 25°C. Before being fed to the polymerization reactor, MPB with a molecular weight of 2700 was fed directly into the catalyst complex in an amount of 0.4 mol per neodymium.

6000 ml of a butadiene solution (18.6%) and 2000 ml of a solvent, which was a cyclohexane/nefras mixture in a mass ratio of 70/30, were loaded into a 10L reactor equipped with a stirrer and a jacket for heat removal, the mixture was heated to 40°C, then the catalyst system (100 ml) was fed. The polymerization reaction temperature was 60°C.

After reaching a monomer conversion of 95%, 2 kg of the polymerizate were taken for analysis, and the obtained data were compared with those of a modified polymer. A phenolic nonstaining antioxidant was introduced into the sampled polymerizate, degassed, and dried on a roller. Then, its physical and mechanical parameters and molecular weight characteristics were determined.

A modifier, ethyl polysilicate with a SiO₂ content of 40-42% (A), was added to the remaining polymerizate; the dosage of the modifier was 13 g per 1 kg of polymer. The modification process was carried out with constant stirring for 60 min at a temperature of 60°C. Then, a phenolic nonstaining antioxidant was added. The mass fraction of the antioxidant was 0.2%. The polymer was degassed and dried on rollers, and its physical and mechanical parameters and molecular weight characteristics were determined (see Table 1).

### Example 3

The example is similar to example 2, with the difference being the use of MPB with a molecular weight of 3100 in an amount of 0.3 mol per neodymium and an oligomeric siloxane comprising vinyl and methoxy groups, with a SiO₂ content of 54% (B). The modifier dosage was 10 g per 1 kg polymer.

### Example 4

The example is similar to example 2, with the difference that instead of neodymium neodecanoate, tris-[bis(2-ethylhexyl)phosphate] was used; the dosage of MPB was 0.4 mol per neodymium, the oligomeric silicate was ethyl polysilicate (A), and the modifier dosage was 5 g per 1 kg of polymer.

### Example 5

The example is similar to example 4, with the difference that the chlorinating agent in the catalyst complex was diethylaluminum sesquichloride (DEAC). The ratio of components in the catalyst complex was BD:Nd:DIBAG:DEAC = 10:1:10:2.5. The aging time of the complex was 22 hours at a temperature of 25°C. Before being fed to the polymerization reactor, MPB with a molecular weight of 5500 was fed directly into the catalyst complex in an amount of 0.1 mol per neodymium, and the dosage of oligomeric silicate, ethyl polysilicate (A), was 0.1 g per 1 kg of polymer.

### Example 6

The example is similar to example 3, with the difference being the use of triisobutylaluminum (TIBA) and DIBAG in the catalyst complex. The ratio of components in the catalyst complex was BD:Nd:TIBA:DIBAG:EASC = 10:1:8:3.0:2.1. The aging time of the complex was 22 hours at a temperature of 25°C. Before being fed to the polymerization reactor, MPB was fed directly into the catalyst complex in a dosage of 0.1 mol per neodymium, the dosage of oligomeric silicate, ethyl polysilicate (A), was 30 g/kg of polymer.

### Example 7

The example is similar to example 3, with the difference that MPB was used in an amount of 0.1 mol per neodymium, and the dosage of oligomeric silicate (B) was 50 g per 1 kg of polymer.

### Example 8

The example is similar to example 5, with the difference being the use of triethylaluminum (TEA) and DIBAG in the catalyst complex. The ratio of components in the catalyst complex was BD:Nd:TEA:DIBAG:DEAH = 10:1:8:5.0:2.3. The aging time of the complex was 22 hours at a temperature of 25°C. Before being fed to the polymerization reactor, MPB was fed directly into the catalyst complex, and the dosage of oligomeric silicate (A) was 0.01 g per 1 kg of polymer.

### Example 9

The example is similar to example 4, with the difference being the use of GdV₃, gadolinium versatate, in the catalyst complex. The ratio of components in the catalyst complex was BD:Gd:DIBAG:EACX = 15:1:13.0:2.4. The aging time of the complex was 22 hours at a temperature of 25°C. Before being fed to the polymerization reactor, MPB was fed directly into the catalyst complex at a dosage of 0.01 mol per gadolinium; an oligomeric siloxane containing vinyl and ethoxy groups, with a SiO₂ content of 45% (C) was used at a dosage of 50 g per 1 kg of polymer.

### Example 10

The example is similar to example 9, with the difference being the use of DEAC in the catalyst complex. The ratio of components in the catalyst complex was BD:Gd:DIBAG:DEAH = 10:1:11.5:2.5. The aging time of the complex was 22 hours at a temperature of 25°C. Before being fed to the polymerization reactor, MPB was fed directly into the catalyst complex at a dosage of 0.05 mol per lanthanide, the dosage of oligomeric silicate (C) was 30 g per 1 kg of polymer.

### Example 11

The example is similar to example 10, with the difference being the use of TEA and DIBAG in the catalyst complex. The ratio of components in the catalyst complex was BD:Gd:TEA:DIBAG:DEAH = 5:1:7.7:7.0::2.7. The aging time of the complex was 22 hours at a temperature of 25°C. Before being fed to the polymerization reactor, MPB with a molecular weight of 3100 was fed directly into the catalyst complex at a dosage of 2.5 mol per lanthanide, and the dosage of oligomeric silicate (C) was 15 g per 1 kg of polymer.

### Example 12

The example is similar to example 11, with the difference being the use of neodymium tris-[(2-ethyl)hexanoate] (NdEh₃) in the catalyst complex. The ratio of components in the catalyst complex was BD:Nd:TEA:DIBAG:DEAH = 10:1:10:4.0:2.5. The aging time of the complex was 22 hours at a temperature of 25°C. Before being fed to the polymerization reactor, MPB with a molecular weight of 3100 was fed directly into the catalyst complex at a dosage of 5.0 mol per lanthanide, the dosage of oligomeric silicate (D), which was oligomeric siloxane comprising vinyl, propyl and ethoxy groups, was 10 g per 1 kg of polymer.

### Example 13

The example is similar to example 12, with the difference being the use of TIBA and EASC in the catalyst complex. The ratio of components in the catalyst complex was BD:Nd:TIBA:DIBAG:EASC = 8:1:9:5.4:2.5. The aging time of the complex was 22 hours at a temperature of 25°C. Before being fed to the polymerization reactor, MPB with a molecular weight of 5500 was fed directly into the catalyst complex at a dosage of 2.0 mol per lanthanide, and the dosage of oligomeric silicate (D) was 17 g per 1 kg of polymer.

### Example 14

The example is similar to example 13, with the difference being the use of DIBAG in the catalyst complex. The ratio of components in the catalyst complex was BD:Nd:DIBAG:EASC = 12:1:11:3.5:3.0. The aging time of the complex was 22 hours at a temperature of 25°C. Before being fed to the polymerization reactor, MPB with a molecular weight of 5500 was fed directly into the catalyst complex at a dosage of 4.0 mol per lanthanide, and the dosage of oligomeric silicate (D) was 13 g per 1 kg of polymer.

### Example 15

The example is similar to example 14, with the difference being the use of praseodymium versatate (PrV3) in the catalyst complex. The ratio of components in the catalyst complex was BD:Pr:DIBAG:EASC = 15:1:15:4.5:2.7. The aging time of the complex was 22 hours at a temperature of 25°C. Before being fed to the polymerization reactor, MPB with a molecular weight of 3100 was fed directly into the catalyst complex at a dosage of 4.5 mol per lanthanide, and the dosage of oligomeric silicate (A) was 13 g per 1 kg of polymer.

### Example 16

The example is similar to example 15, with the difference being the use of praseodymium versatate (PrV3) in the catalyst complex. Before being fed to the polymerization reactor, MPB with a molecular weight of 2700 was fed directly into the catalyst complex at a dosage of 5.0 mol per lanthanide, and the dosage of oligomeric silicate (B) was 50 g per 1 kg of polymer.

**Table 1**

| Mode of production and plastoelastic properties of polydienes | | | | | | | | |
|---|---|---|---|---|---|---|---|---|
| | Example number | | | | | | | |
| | 1 | 2 | 3 | 4 | 5 | 6 | 7 | 8 |
| Catalyst system | NdV₃ | NdV₃ | NdV₃ | NdP₃ | NdP₃ | NdV₃ | NdV₃ | NdV₃ |
| Maleinized polybutadiene | - | Mn-2700 | Mn-3100 | Mn-2700 | Mn-5500 | Mn-3100 | Mn-3100 | Mn-5500 |
| MPB/lantanoid dosage, mol | - | 0.1 | 0.3 | 0.4 | 1.0 | 0.1 | 0.1 | 0.1 |
| Olygomeric silicate | A | A | B | A | A | B | B | A |
| Oligomeric silicate dosage, g/kg polymer | 13 | 13 | 10 | 5 | 0.5 | 30 | 50 | 0.01 |

| Properties before and after modification | | | | | | | | |
|---|---|---|---|---|---|---|---|---|
| Mooney viscosity ML(1+4) (100°C), arbitrary Mooney units | | | | | | | | |
| Before | 32 | 44.9 | 41.8 | 34.3 | 33.7 | 30.7 | 38 | 41.7 |
| After | 39 | 54.2 | 46.1 | 41.8 | 46.3 | 50.9 | 66 | 42.0 |
| Area under relaxation curve A, arbitrary Mooney units | | | | | | | | |
| Before | - | 188 | 146 | 91 | 99 | 89 | 87 | 134 |
| After | - | 246 | 252 | 231 | 238 | 249 | 295 | 198 |
| Plasticity | | | | | | | | |
| Before | - | 0.55 | 0.49 | 0.54 | 0.53 | 0.66 | 0,59 | 0.57 |
| After | - | 0.45 | 0.47 | 0.52 | 0.53 | 0.48 | 0,40 | 0.57 |
| Cold flow, mm/h | | | | | | | | |
| Before | - | 40.0 | 38 | 44 | 40 | 45 | 52 | 45 |
| After | - | 38.5 | 38 | 40 | 37 | 25 | 17 | 42 |
| M_{w}/Mₙ | | | | | | | | |
| Before | 2.9 | 2.31 | 2.40 | 2.15 | 2.33 | 2.42 | 2.38 | 2.47 |
| After | 4.4 | 2.59 | 2.45 | 2.16 | 2.38 | 2.50 | 2.60 | 2.47 |

**Table 2**

| Mode of production and plastoelastic properties of polydienes | | | | | | | | |
|---|---|---|---|---|---|---|---|---|
| | Example number | | | | | | | |
| | 9 | 10 | 11 | 12 | 13 | 14 | 15 | 16 |
| Catalyst system | GdV₃ | GdV₃ | GdV₃ | NdEh₃ | NdEh₃ | NdEh₃ | PrV₃ | PrV₃ |
| Maleinized polybutadiene | Mn-2700 | Mn-2700 | Mn-3100 | Mn-3100 | Mn-5500 | Mn-5500 | Mn-3100 | Mn-2700 |
| MPB/lantanoid dosage, mol | 0.01 | 0.05 | 2.5 | 5.0 | 2.0 | 4.0 | 4.5 | 5.0 |
| Olygomeric silicate | C | C | C | D | D | D | A | B |
| Oligomeric silicate dosage, g/kg polymer | 50 | 30 | 15 | 10 | 17 | 13 | 23 | 45 |

| Properties before and after modification | | | | | | | | |
|---|---|---|---|---|---|---|---|---|
| Mooney viscosity ML(1+4) (100°C), arbitrary Mooney units | | | | | | | | |
| Before | 28.3 | 29.4 | 35.1 | 29.7 | 37.0 | 37.6 | 33.2 | 34.7 |
| After | 47.4 | 47.1 | 42.3 | 40.1 | 43.3 | 44.1 | 48.9 | 49.8 |
| Area under relaxation curve A, arbitrary Mooney units | | | | | | | | |
| Before | 86 | 88 | 95 | 89 | 98 | 104 | 96 | 112 |
| After | 298 | 285 | 269 | 256 | 264 | 255 | 298 | 375 |
| Plasticity | | | | | | | | |
| Before | 0.66 | 0.61 | 0.58 | 0.61 | 0.63 | 0.59 | 0,54 | 0.50 |
| After | 0.56 | 0.50 | 0.46 | 0.48 | 0.47 | 0.44 | 0,43 | 0.42 |
| Cold flow, mm/h | | | | | | | | |
| Before | 65.0 | 65 | 47 | 54 | 45 | 54 | 48 | 65 |
| After | 15.7 | 18 | 28 | 34 | 23 | 31 | 11 | 5 |
| M_{w}/Mₙ | | | | | | | | |
| Before | 2.28 | 2.21 | 2.38 | 2.45 | 2.33 | 2.42 | 2.48 | 2.47 |
| After | 2.49 | 2.44 | 2.50 | 2.64 | 2.55 | 2.60 | 2.67 | 2.67 |

List of the abbreviations used in Table 1:
NdP₃ - tris-[bis(2-ethylhexyl)phosphate]neodymium
NdV₃ - neodymium neodecanoate
MPB - maleinized polybutadiene
GdV₃ - gadolinium versatate
NdEh₃ - tris-[(2-ethyl)hexanoate]neodymium
PrV₃ - praseodymium versatate
DEAI - diethylaluminum iodide
DEAC - diethylaluminum chloride
EASC - ethylaluminum sesquichloride
A - Ethyl polysilicate, polymerized tetraethyl orthosilicate with a SiO₂ content of 40-42%
B - Oligomeric siloxane comprising vinyl and methoxy groups with a SiO₂ content of 54%
C - Oligomeric siloxane comprising vinyl and ethoxy groups with a SiO₂ content of 45%
D - Oligomeric siloxane comprising vinyl, propyl and ethoxy groups.

The polymers obtained in Examples 3 and 4 of the invention were tested in rubber mixtures prepared according to the formulation presented in Table 2. The test results in comparison with the prototype are given in Table 3.

**Table 2**

| Formulation of rubber mixtures | |
|---|---|
| Ingredient name | Weight part |
| Butadiene rubber | 100 |
| Carbon black N330 (IRB 8) | 60.00 |
| White lead | 3.00 |
| Technical stearic acid | 2.00 |
| Naphtenic base oil | 15.00 |
| Sulfur gas | 1.50 |
| Sulphene amide T | 0.90 |
| Total | 182.40 |

**Table 3**

| Rubber properties | | | | | | |
|---|---|---|---|---|---|---|
| | Example | | | | | |
| | 1 | 3 | 4 | 11 | 13 | 15 |
| Mooney viscosity ML1+4 (100°C) of rubber mixture, arbitrary Mooney units | 71.0 | 65.4 | 67.3 | 63.2 | 60.5 | 59.9 |
| Area under relaxation curve A, Mooney units * s | - | 355 | 370 | 385 | 395 | 387 |
| Payne effect | - | 128 | 120 | 125 | 121 | 117 |
| ΔG' = G'_{1.4%} - G'_{50%}, kPa | | | | | | |
| Tear resistance [N/mm] | 72 | 75 | 77 | 76 | 77 | 77 |

As can be seen from Table 1, the polymers obtained according to the invention are characterized by a narrow molecular weight distribution and low cold flow. The data presented in Table 3 clearly show that polydiene rubbers according to the invention have improved tear resistance and improved processability (low Mooney viscosity).

## Claims

1. A method for producing a modified polydiene by polymerization of a conjugated diene in an organic solvent, the method comprising the following steps: 1) preparing a catalyst complex including a lanthanide compound, an organoaluminum compound, a halogen-containing component, and a conjugated diene; 2) reacting the catalyst complex prepared in step 1) and a maleinized low molecular weight polybutadiene to produce a modified catalyst complex, wherein the maleinized low molecular weight polybutadiene is used in an amount of at least 0.01 mol per 1 mol of lanthanide; 3) subjecting the conjugated diene to polymerization using the modified catalyst complex produced in step 2) in the organic solvent; 4) subjecting the resulting polydiene to post-polymerization modification using at least one oligomeric silicate.

2. The method according to claim 1, **characterized in that** the maleinized low molecular weight polybutadiene in step 2) is used in a molar ratio of (0.01-5):1 per lanthanide, preferably (0.1-1.00):1 per lanthanide.

3. The method according to claim 1 or 2, **characterized in that** the lanthanide compound is selected from compounds including at least one lanthanide atom selected from the group consisting of lanthanum, neodymium, cerium, praseodymium, promethium, samarium, europium, gadolinium, terbium, dysprosium, holmium, erbium, thulium, ytterbium, and lutetium, particularly preferably the lanthanide compound is selected from neodymium compounds, preferably the lanthanide compound is selected from carboxylates, organophosphates, organophosphonates, organophosphinates, carbamates, dithiocarbamates, xanthogenates, β-diketonates, halides, oxyhalides and alcoholates, most preferably the lanthanide compound is selected from the group consisting of tris-[bis(2-ethylhexyl)phosphate]neodymium, neodymium neodecanoate, tris-[(2-ethyl)hexanoate]neodymium, gadolinium versatate and praseodymium versatate.

4. The method according to any one of claims 1 to 3, **characterized in that** the time of modification is from 5 minutes to 5 hours, preferably from 20 minutes to 1 hour.

5. The method according to any one of claims 1 to 4, **characterized in that** the modification is performed at a temperature of from 60 to 90°C.

6. The method according to any one of claims 1-5, **characterized in that** the organoaluminum compound is selected from the group consisting of trialkylaluminum, triphenylaluminum, dialkylaluminum hydrides, alkylaluminum dihydrides and mixtures thereof; the organoaluminum compound is preferably selected from the group consisting of trimethylaluminum, triethylaluminum, tri-n-propylaluminum, triisopropylaluminum, tri-n-butylaluminum, triisobutylaluminum, tri-tert-butylaluminum, triphenylaluminum, trihexylaluminum, tricyclohexylaluminum, trioctylaluminum, diethylaluminum hydride, di-n-propylaluminum hydride, di-n-butylaluminum hydride, diisobutylaluminum hydride, dihexylaluminum hydride, diisohexylaluminum hydride, dioctylaluminum hydride, diisooctylaluminum hydride, phenylethylaluminum hydride, phenyl-n-propylaluminum hydride, phenylisopropylaluminum hydride, pfenyl-n-butylaluminum hydride, phenylisobutylaluminum hydride, benzylethylaluminum hydride, benzyl-n-butylaluminum hydride, benzylisobutylaluminum hydride, benzylisopropylaluminum hydride and mixtures thereof; the organoaluminum compound is more preferably selected from the group consisting of aluminum alkyls, alkylaluminum hydrides and mixtures thereof; the organoaluminum compound is particularly preferably selected from the group consisting of triethylaluminum, triisobutylaluminum, diisobutylaluminum hydride and mixtures thereof; most preferably the organoaluminum compound is diisobutylaluminum hydride.

7. The method according to any one of claims 1-6, **characterized in that** the conjugated diene is selected from the group consisting of 1,3-butadiene, isoprene, 2,3-dimethyl-1,3-butadiene, 1,3-pentadiene (piperylene), 2-methyl-3-ethyl-1,3-butadiene, 3-methyl-1,3-pentadiene, 2-methyl-3-ethyl-1,3-pentadiene, 3-methyl-1,3-pentadiene, 1,3-hexadiene, 2-methyl-1,3-hexadiene, 1,3-heptadiene, 3-methyl-1,3-heptadiene, 1,3-octadiene, 3-butyl-1,3-octadiene, 3,4-dimethyl-1,3-hexadiene, 4,5-diethyl-1,3-octadiene, phenyl-1,3-butadiene, 2,3-diethyl-1,3-butadiene, 2,3-di-n-propyl-1,3-butadiene, and 2-methyl-3-isopropyl-1,3-butadiene; the conjugated diene is preferably selected from the group consisting of 1,3-butadiene, isoprene and piperylene, most preferably the conjugated diene is 1,3-butadiene.

8. The method according to any one of claims 1-7, **characterized in that** the halogen-containing component is selected from the group consisting of dimethylaluminum chloride, diethylaluminum chloride, diisobutylaluminum chloride, dimethylaluminum bromide, diethylaluminum bromide, diisobutylaluminum bromide, dimethylaluminum fluoride, diethylaluminum fluoride, diisobutylaluminum fluoride, dimethylaluminum iodide, diethylaluminum iodide, diisobutylaluminum iodide, methylaluminum dichloride, ethylaluminum dichloride, methylaluminum dibromide, ethylaluminum dibromide, methylaluminum difluoride, ethylaluminum difluoride, methylaluminum sesquichloride, ethylaluminum sesquichloride, isobutylaluminum sesquichloride, trimethyltin chloride, trimethyltin bromide, triethyltin chloride, triethyltin bromide, di-tert-butyltin dichloride, di-tert-butyltin dibromide, dibutyltin dichloride, dibutyltin dibromide, tributyltin chloride and tributyltin bromide; the halogen-containing component of the catalyst system is preferably selected from the group consisting of ethylaluminum sesquichloride, ethylaluminum dichloride, diethyl aluminum iodide and diethyl aluminum chloride; the halogenated component of the catalyst system is most preferably selected from the group consisting of ethylaluminum sesquichloride, diethylaluminum iodide and diethylaluminum chloride.

9. The method according to any one of claims 1-8, **characterized in that** the organic solvent is selected from the group consisting of aliphatic hydrocarbons, alicyclic hydrocarbons, mono-olefins, aromatic hydrocarbons, and mixtures thereof, preferably the organic solvent is selected from the group consisting of butane, pentane, hexane, heptane, cyclopentane, cyclohexane, 1-butene, 2-butene, benzene, toluene, xylene, and mixtures thereof, most preferably the organic solvent is selected from the group consisting of a cyclohexane:hexane mixture and a cyclohexane:nefras mixture, wherein the ratio of components is (30-55)÷(70-45), respectively.

10. The method according to any one of claims 1, **characterized in that** in the catalyst complex, the molar ratio of lanthanide compound:organoaluminum compound: conjugated diene:halogen-containing component is 1:(8-30):(5-30):(1.5-3.0), preferably 1:(8-20):(5-20):(1.8-2.8), most preferably 1: (10-15):(10-15):(2.1-2.5).

11. The method according to any one of claims 1-10, **characterized in that** the maleinized low molecular weight polybutadiene is an adduct of maleic anhydride and polybutadiene, wherein the adduct comprises from 4 to 24 wt.%, preferably from 5 to 20 wt.%, particularly preferably from 5 to 15 wt.%, most preferably from 5 to 13 wt.% maleic anhydride groups based on the total weight of maleinized polybutadiene and has a molecular weight of from 1200 to 15000 g/mol, preferably from 2000 to 10000 g/mol, particularly preferably from 2000 to 7000 g/mol, and most preferably from 2500 to 5500 g/mol.

12. The method according to any one of claims 1 to 11, **characterized in that** the oligomeric silicate is selected from compounds of the general formula:
X₃-Si-(O-SiX₂)ₙ-X, where X is an alkoxy group of the formula OR, where R is a saturated or unsaturated aliphatic hydrocarbon residue comprising 1 to 30 carbon atoms, a cycloaliphatic hydrocarbon residue comprising 5 to 30 carbon atoms, or an aromatic hydrocarbon residue comprising 6 to 30 carbon atoms, and n is an integer greater than 0, preferably greater than 1, particularly preferably greater than 2, preferably the oligomeric silicate is selected from compounds having the following general formulas:
(RO)₃Si-O-Si(OR)₃,
(RO)₃Si-O-Si(OR)₂-O-Si(OR)₃,
(RO)₃Si-O-Si(OR)₂-O-Si(OR)₂-O-Si(OR)₃,
(RO)₃Si-O-Si(OR)₂-O-Si(OR)₂-O-Si(OR)₂-O-Si(OR)₃,
(RO)₃Si-O-Si(OR)₂-O-Si(OR)₂-O-Si(OR)₂-O-Si(OR)₂-O-Si(OR)₃
or
(RO)₃Si-O-Si(OR)₂-O-Si(OR)₂-O-Si(OR)₂-O-Si(OR)₂-O-Si(OR)₂-O-Si(OR)₃,
where radical R is methyl, ethyl, vinyl, propyl, isopropyl, butyl, isobutyl, pentyl, isopentyl, hexyl, isohexyl, octyl, or isooctyl, most preferably the oligomeric silicate is selected from the group consisting of ethyl polysilicate of the formula (OEt)₃-Si-(O-Si(OEt)₂)ₙ-OEt, where n is an integer from 2 to 3 and the content of SiO₂ is from 40 to 42%; oligomeric vinylsilanes; oligomeric siloxane comprising vinyl and methoxy groups, with a SiO₂ content of 54%; oligomeric siloxane comprising vinyl and ethoxy groups, with a SiO₂ content of 45%; and an oligomeric siloxane comprising vinyl, propyl and ethoxy groups.

13. The method according to any one of claims 1 to 12, **characterized in that** the oligomeric silicates in step 4) are added in an amount of from 0.01 to 50 g per 1 kg of polymer, preferably in an amount of from 0.5 to 10 g per 1 kg of polymer.

14. The method according to any one of claims 1 to 13, **characterized in that** the reaction of the catalyst complex prepared in step 1) with the maleinized low molecular weight polybutadiene is carried out by introducing the maleinized low molecular weight polybutadiene directly into the prepared catalyst complex or by introducing the maleinized low molecular weight polybutadiene into charge stock (monomer solution) immediately before feeding the catalyst complex.

15. The method according to any one of claims 1-14, **characterized in that** the monomer concentration in the solvent is 7-15% by weight, preferably 9-13% by weight.

16. A modified polydiene produced by the method according to any one of claims 1-15, **characterized by** a Mooney viscosity of 37 to 45 arbitrary Mooney units before modification and from 40 to 66 arbitrary Mooney units after modification, a polydispersity index in the range of 2.16 to 2.6, a cold flow in the range of 5 to 40 mm/h, a plasticity level of 0.4-0.6, and an elastic recovery in the range of 1.1 to 1.8 mm.

17. The modified polydiene according to claim 16, which is polybutadiene.

18. Rubber mixtures based on the polydienes according to any one of claims 16-17.

## Patentansprüche

1. Verfahren zur Herstellung eines modifizierten Polydiens durch Polymerisation eines konjugierten Diens in einem organischen Lösungsmittel, wobei das Verfahren die folgenden Schritte umfasst: 1) Herstellung eines Katalysatorkomplexes, der eine Lanthanidverbindung, eine Organoaluminiumverbindung, eine halogenhaltige Komponente und ein konjugiertes Dien umfasst; 2) Umsetzung des in Schritt 1) hergestellten Katalysatorkomplexes und eines maleinisierten Polybutadiens mit niedrigem Molekulargewicht zur Herstellung eines modifizierten Katalysatorkomplexes, wobei das maleinisierte Polybutadien mit niedrigem Molekulargewicht in einer Menge von mindestens 0,01 Mol pro 1 Mol Lanthanid verwendet wird; 3 ) das konjugierte Dien einer Polymerisation unter Verwendung des in Schritt 2) hergestellten modifizierten Katalysatorkomplexes in dem organischen Lösungsmittel unterzogen wird; 4) das resultierende Polydien einer Nachpolymerisationsmodifizierung unter Verwendung mindestens eines oligomeren Silikats unterzogen wird.

2. Verfahren nach Anspruch 1, **dadurch gekennzeichnet, dass** das maleinisierte Polybutadien mit niedrigem Molekulargewicht in Schritt 2) in einem Molverhältnis von (0,01-5) :1 pro Lanthanid, vorzugsweise (0,1 - 1,00) :1 pro Lanthanid, verwendet wird.

3. Verfahren nach Anspruch 1 oder 2, **dadurch gekennzeichnet, dass** die Lanthanidverbindung aus Verbindungen ausgewählt ist, die mindestens ein Lanthanidatom enthalten, das aus der Gruppe ausgewählt ist, die aus Lanthan, Neodym, Cer, Praseodym, Promethium, Samarium, Europium, Gadolinium, Terbium, Dysprosium, Holmium, Erbium, Thulium, Ytterbium und Lutetium besteht, wobei die Lanthanidverbindung besonders bevorzugt die Lanthanidverbindung aus Neodymverbindungen ausgewählt ist, vorzugsweise die Lanthanidverbindung aus Carboxylaten, Organophosphaten , Organophosphonaten, Organophosphinaten, Carbamaten, Dithiocarbamaten, Xanthogenaten, β-Diketonaten, Halogeniden, Oxyhalogeniden und Alkoholaten ausgewählt ist, am meisten bevorzugt die Lanthanidverbindung aus der Gruppe bestehend aus Tris-[bis(2-ethylhexyl phosphat]neodym, Neodymneodecanoat, Tris-[ (2-ethyl)hexanoat]neodym, Gadoliniumversatat und Praseodymversatat besteht.

4. Verfahren nach einem der Ansprüche 1 bis 3, **dadurch gekennzeichnet, dass** die Modifikationszeit 5 Minuten bis 5 Stunden, vorzugsweise 20 Minuten bis 1 Stunde beträgt.

5. Verfahren nach einem der Ansprüche 1 bis 4, **dadurch gekennzeichnet, dass** die Modifikation bei einer Temperatur von 60 bis 90 °C durchgeführt wird.

6. Verfahren nach einem der Ansprüche 1 bis 5, **dadurch gekennzeichnet, dass** die aluminiumorganische Verbindung aus der Gruppe ausgewählt ist, die aus Trialkylaluminium, Triphenylaluminium, Dialkylaluminiumhydriden , Alkylaluminiumdihydriden und Gemischen davon besteht; die aluminiumorganische Verbindung vorzugsweise aus der Gruppe ausgewählt ist, die aus Trimethylaluminium , Triethylaluminium, Tri-n-propylaluminium , Triisopropylaluminium, Tri-n-butylaluminium, Triisobutylaluminium, Tri-tert-butylaluminium, Triphenylaluminium, Trihexylaluminium, Tricyclohexylaluminium, Trioctylaluminium, Diethylaluminiumhydrid, Di-n-propylaluminiumhydrid, Di-n-butylaluminiumhydrid, Diisobutylaluminiumhydrid, Dihexylaluminiumhydrid, Diisohexylaluminiumhydrid, Dioctylaluminiumhydrid, Diisooctylaluminiumhydrid, Phenylethylaluminiumhydrid, Phenyl-n-propylaluminiumhydrid, Phenylisopropylaluminiumhydrid, Phenyl-n-butylaluminiumhydrid, Phenylisobutylaluminiumhydrid, Benzylethylaluminiumhydrid, Benzyl-n-butylaluminiumhydrid, Benzylisobutylaluminiumhydrid, Benzylisopropylaluminiumhydrid und Mischungen davon; die Organoaluminiumverbindung ist bevorzugter aus der Gruppe bestehend aus Aluminiumalkylen, Alkylaluminiumhydriden und Mischungen davon ausgewählt; die Organoaluminiumverbindung besonders bevorzugt aus der Gruppe bestehend aus Triethylaluminium, Triisobutylaluminium, Diisobutylaluminiumhydrid und Mischungen davon ausgewählt ist; am meisten bevorzugt ist die Organoaluminiumverbindung Diisobutylaluminiumhydrid.

7. Verfahren nach einem der Ansprüche 1 bis 6, **dadurch gekennzeichnet, dass** das konjugierte Dien aus der Gruppe bestehend aus 1,3-Butadien, Isopren, 2,3-Dimethyl-1,3-butadien, 1,3-Pentadien (Piperylen), 2-Methyl-3-ethyl-1,3-butadien, 3-Methyl-1,3- Pentadien, 2-Methyl-3-ethyl-1,3-pentadien, 3-Methyl-1,3-pentadien, 1,3-Hexadien, 2-Methyl-1,3-hexadien, 1,3-Heptadien, 3-Methyl-1,3-heptadien, 1,3-Octadien, 3-Butyl-1,3-octadien Octadien, 3,4-Dimethyl-1,3-hexadien, 4,5-Diethyl-1,3-octadien, Phenyl-1,3-butadien, 2,3-Diethyl-1,3-butadien, 2,3-Di-n-propyl-1,3-butadien und 2-Methyl-3-isopropyl-1, 3-Butadien; das konjugierte Dien wird vorzugsweise aus der Gruppe ausgewählt, die aus 1,3-Butadien, Isopren und Piperylen besteht, am meisten bevorzugt ist das konjugierte Dien 1,3-Butadien.

8. Verfahren nach einem der Ansprüche 1-7, **dadurch gekennzeichnet, dass** die halogenhaltige Komponente aus der Gruppe bestehend aus Dimethylaluminiumchlorid, Diethylaluminiumchlorid, Diisobutylaluminiumchlorid, Dimethylaluminiumbromid, Diethylaluminiumbromid, Diisobutylaluminiumbromid, Dimethylaluminiumfluorid, Diethylaluminiumfluorid, Diisobutylaluminiumfluorid, Dimethylaluminiumiodid, Diethylaluminiumiodid, Diisobutylaluminiumiodid, Methylaluminiumdichlorid, Ethylaluminiumdichlorid, Methylaluminiumdibromid, Ethylaluminiumdibromid, Methylaluminiumdifluorid, Ethylaluminiumdifluorid, Methylalumin sesquichlorid, Ethylaluminiumsesquichlorid, Isobutylaluminiumsesquichlorid, Trimethylzinnchlorid, Trimethylzinnbromid, Triethylzinnchlorid, Triethylzinnbromid, Di-tert-butylzinndichlorid, Di-tert-butylzinndibromid, Dibutylzinndichlorid, Dibutylzinndibromid, Tributylzinnchlorid und Tributylzinndibromid; die halogenhaltige Komponente des Katalysatorsystems wird vorzugsweise aus der Gruppe ausgewählt, die aus Ethylaluminiumsesquichlorid, Ethylaluminiumdichlorid Dichlorid, Diethylaluminiumiodid und Diethylaluminiumchlorid ausgewählt ist; die halogenierte Komponente des Katalysatorsystems am meisten bevorzugt aus der Gruppe bestehend aus Ethylaluminiumsesquichlorid, Diethylaluminiumiodid und Diethylaluminiumchlorid ausgewählt ist.

9. Verfahren nach einem der Ansprüche 1-8, **dadurch gekennzeichnet, dass** das organische Lösungsmittel aus der Gruppe bestehend aus aliphatischen Kohlenwasserstoffen, alicyclischen Kohlenwasserstoffen, Monoolefinen, aromatischen Kohlenwasserstoffen und Gemischen davon ausgewählt ist, wobei das organische Lösungsmittel vorzugsweise aus der Gruppe bestehend aus Butan, Pentan, Hexan, Heptan, Cyclopentan, Cyclohexan, 1-Buten, 2-Buten, Benzol, Toluol, Xylol und Mischungen davon ausgewählt ist, wobei das organische Lösungsmittel am meisten bevorzugt aus der Gruppe ausgewählt ist, die aus einer Cyclohexan:Hexan-Mischung und einer Cyclohexan:Naphtha-Mischung besteht, wobei das Verhältnis der Komponenten jeweils (30-55)÷(70-45) beträgt.

10. Verfahren nach einem der Ansprüche 1, **dadurch gekennzeichnet, dass** in dem Katalysatorkomplex das Molverhältnis von Lanthanidverbindung :
Organoaluminiumverbindung : konjugiertem Dien : halogenhaltiger Komponente 1: (8-30) : (5-30) : (1,5-3,0) , vorzugsweise 1 : (8-20) : (5-20) : (1,8-2,8), am meisten bevorzugt 1 : (10-15) : (10-15) : (2,1-2,5).

11. Verfahren nach einem der Ansprüche 1-10, **dadurch gekennzeichnet, dass** das maleinisierte Polybutadien mit niedrigem Molekulargewicht ein Addukt von Maleinsäureanhydrid und Polybutadien ist, wobei das Addukt 4 bis 24 Gew.-%, vorzugsweise 5 bis 20 Gew.-%, besonders bevorzugt 5 bis 15 Gew.-% und am meisten bevorzugt 5 bis 13 Gew.-% Maleinsäureanhydridgruppen , bezogen auf das Gesamtgewicht des maleinisierten Polybutadiens, und ein Molekulargewicht von 1200 bis 15000 g/mol, vorzugsweise von 2000 bis 10000 g/mol, besonders bevorzugt von 2000 bis 7000 g/mol und am meisten bevorzugt von 2500 bis 5500 g/mol.

12. Verfahren nach einem der Ansprüche 1 bis 11, **dadurch gekennzeichnet, dass** das oligomere Silikat aus Verbindungen der allgemeinen Formel:
X₃-Si-(O-SiX₂)ₙ-X ausgewählt ist, wobei X eine Alkoxygruppe der Formel OR ist, wobei R ein gesättigter oder ungesättigter aliphatischer Kohlenwasserstoffrest mit 1 bis 30 Kohlenstoffatomen, ein cycloaliphatischer Kohlenwasserstoffrest mit 5 bis 30 Kohlenstoffatomen oder ein aromatischer Kohlenwasserstoffrest mit 6 bis 30 Kohlenstoffatomen ist, und n eine ganze Zahl größer als 0, vorzugsweise größer als 1, besonders bevorzugt größer als 2 ist, wobei das oligomere Silikat aus Verbindungen mit den folgenden allgemeinen Formeln ausgewählt:
(RO)₃Si-O-Si(OR)₃,
(RO)₃Si-O-Si(OR)₂-O-Si(OR)₃,
(RO)₃Si-O-Si(OR)₂-O-Si(OR)₂-O-Si(OR)₃,
(RO)₃Si-O-Si(OR)₂-O-Si(OR)₂-O-Si(OR)₂O-Si(OR)₃,
(RO)₃Si-O-Si(OR)₂-O-Si(OR)₂-O-Si(OR)₂-O-Si(OR)₂-O-Si(OR)₃
oder
(RO)₃Si-O-Si(OR)₂-O-Si(OR)₂-O-Si(OR)₂-O-Si(OR)₂-O-Si(OR)₂-O-Si(OR)₃,
wobei der Rest R Methyl, Ethyl, Vinyl, Propyl, Isopropyl, Butyl, Isobutyl, Pentyl, Isopentyl, Hexyl, Isohexyl, Octyl oder Isooctyl ist, wobei das oligomere Silikat am meisten bevorzugt aus der Gruppe ausgewählt ist, die aus Ethylpolysilikat der Formel (OEt)₃-Si-(O-Si(OEt)₂)ₙ-OEt besteht, wobei n eine ganze Zahl von 2 bis 3 ist und der Gehalt an SiO₂ 40 bis 42 % beträgt; oligomere Vinylsilane; oligomeres Siloxan, das Vinyl- und Methoxygruppen umfasst, mit einem SiO₂-Gehalt von 54 %; oligomeres Siloxan, das Vinyl- und Ethoxygruppen umfasst, mit einem SiO₂-Gehalt von 45 %; und ein oligomeres Siloxan, das Vinyl-, Propyl- und Ethoxygruppen umfasst.

13. Verfahren nach einem der Ansprüche 1 bis 12, **dadurch gekennzeichnet, dass** die oligomeren Silikate in Schritt 4) in einer Menge von 0,01 bis 50 g pro 1 kg Polymer, vorzugsweise in einer Menge von 0,5 bis 10 g pro 1 kg Polymer, zugegeben werden.

14. Verfahren nach einem der Ansprüche 1 bis 13, **dadurch gekennzeichnet, dass** die Umsetzung des in Schritt 1) hergestellten Katalysatorkomplexes mit dem maleinisierten Polybutadien mit niedrigem Molekulargewicht durch direktes Einbringen des maleinisierten Polybutadiens mit niedrigem Molekulargewicht in den hergestellten Katalysatorkomplex oder durch Einbringen des maleinisierten Polybutadiens mit niedrigem Molekulargewicht in das Beschickungsmaterial (Monomerlösung) unmittelbar vor dem Zuführen des Katalysatorkomplexes durchgeführt wird.

15. Verfahren nach einem der Ansprüche 1-14, **dadurch gekennzeichnet, dass** die Monomerkonzentration im Lösungsmittel 7-15 Gew.-%, vorzugsweise 9-13 Gew.-% beträgt.

16. Ein modifiziertes Polydien, das durch das Verfahren gemäß einem der Ansprüche 1-15 hergestellt wird, **gekennzeichnet durch** eine Mooney-Viskosität von 37 bis 45 willkürlichen Mooney-Einheiten vor der Modifizierung und von 40 bis 66 willkürlichen Mooney-Einheiten nach der Modifizierung, einen Polydispersitätsindex im Bereich von 2,16 bis 2,6, einen Kaltfluss im Bereich von 5 bis 40 mm/h, einen Plastizitätsgrad von 0,4-0,6 und eine elastische Rückverformung im Bereich von 1,1 bis 1,8 mm.

17. Das modifizierte Polydien gemäß Anspruch 16, das Polybutadien ist.

18. Kautschukmischungen auf Basis der Polydiene gemäß einem der Ansprüche 16-17.

## Revendications

1. Méthode de production d'un polydiène modifié par polymérisation d'un diène conjugué dans un solvant organique, la méthode comprenant les étapes suivantes : 1) préparation d'un complexe catalytique comprenant un composé de lanthanide, un composé organoaluminique, un composant halogéné et un diène conjugué ; 2) réaction du complexe catalytique préparé à l'étape 1) et d'un polybutadiène maléinisé de faible poids moléculaire pour produire un complexe catalytique modifié, dans lequel le polybutadiène maléinisé de faible poids moléculaire est utilisé en une quantité d'au moins 0. 01 mol pour 1 mol de lanthanide ; 3) soumettre le diène conjugué à la polymérisation en utilisant le complexe catalytique modifié produit à l'étape 2) dans le solvant organique ; 4) soumettre le polydiène résultant à une modification post-polymérisation en utilisant au moins un silicate oligomérique.

2. Méthode selon la revendication 1, **caractérisée par le fait que** le polybutadiène maléinisé de faible poids moléculaire de l'étape 2) est utilisé dans un rapport molaire de (0,01-5) :1 par lanthanide, de préférence (0,1 - 1,00) :1 par lanthanide.

3. Méthode selon la revendication 1 ou 2 , **caractérisée par le fait que** le composé de lanthanide est choisi parmi les composés comprenant au moins un atome de lanthanide choisi dans le groupe constitué par le lanthane, le néodyme, le cérium, le praséodyme, le prométhium, le samarium, l'europium, le gadolinium, le terbium, le dysprosium, l'holmium, l'erbium, le thulium, l'ytterbium et le lutécium, de manière particulièrement préférée le composé de lanthanide est choisi parmi les composés de néodyme, de préférence, le composé de lanthanide est choisi parmi les carboxylates, les organophosphates, les organophosphonates, les organophosphinates, les carbamates, les dithiocarbamates, les xanthogénates, les ß-dicétonates, les halogénures, les oxyhalogénures et les alcoolates, de préférence, le composé de lanthanide est choisi dans le groupe constitué par le tris-[bis(2-éthylhexyl)phosphate]néodyme, le néodécanoate de néodyme, le tris-[(2-éthyl)hexanoate]néodyme, le versatate de gadolinium et le versatate de praséodyme.

4. La méthode selon l'une des revendications 1 à 3, **caractérisée par le fait que** le temps de modification est compris entre 5 minutes et 5 heures, de préférence entre 20 minutes et 1 heure.

5. La méthode selon l'une des revendications 1 à 4, **caractérisée par le fait que** la modification est effectuée à une température de 60 à 90°C.

6. Méthode selon l'une quelconque des revendications 1 à 5, **caractérisée par le fait que** le composé organoaluminique est choisi dans le groupe constitué par les trialkylaluminiums, les triphénylaluminiums, les hydrures de dialkylaluminium, les dihydrures d'alkylaluminium et leurs mélanges ; le composé organoaluminique est de préférence choisi dans le groupe constitué par le triméthylaluminium, le triéthylaluminium, le tri-n-propylaluminium, le triisopropylaluminium, le tri-n- butylaluminium, le triisobutylaluminium, le tri-tert-butylaluminium, le triphénylaluminium, le trihexylaluminium, le tricyclohexylaluminium, le trioctylaluminium, l'hydrure de diéthylaluminium, l'hydrure de dipropylaluminium, l'hydrure de dipropylaluminium, l'hydrure de dipropylaluminium, l'hydrure de dipropylaluminium et les mélanges de ces composés hydrure de di-n- propylaluminium, hydrure de di - n-butylaluminium, hydrure de diisobutylaluminium, hydrure de dihexylaluminium, hydrure de diisohexylaluminium, hydrure de dioctylaluminium, hydrure de diisooctylaluminium, hydrure de phényléthylaluminium, hydrure de phényl - n- propylaluminium, hydrure de phénylisopropylaluminium, hydrure de phényl - n - butylaluminium, phénylisobutylaluminium, benzyléthylaluminium, benzyl-n-butylaluminium, benzylisobutylaluminium, benzylisopropylaluminium et leurs mélanges ; le composé organoaluminique est plus préférentiellement choisi dans le groupe constitué par les alkyles d'aluminium, les hydrures d'alkylaluminium et leurs mélanges ; le composé organoaluminium est de préférence choisi dans le groupe constitué par le triéthylaluminium, le triisobutylaluminium, l'hydrure de diisobutylaluminium et leurs mélanges ; de préférence, le composé organoaluminium est l'hydrure de diisobutylaluminium.

7. Procédé selon l'une quelconque des revendications 1 à 6, **caractérisé par le fait que** le diène conjugué est choisi dans le groupe constitué par le 1,3-butadiène, l'isoprène, le 2,3-diméthyl - 1,3- butadiène, le 1,3- pentadiène (pipérylène), le 2- méthyl-3-éthyl -1,3-butadiène, le 3- méthyl - 1,3- pentadiène, le 2- méthyl-3-éthyl - 1,3-pentadiène, le 1,3-hexadiène, le 2-méthyl-1,3-hexadiène, le 1,3-heptadiène, le 3-méthyl-1,3-heptadiène, le 3-méthyl-1,3-heptadiène, 3-méthyl-1,3-pentadiène, 1,3-hexadiène, 2-méthyl-1,3-hexadiène, 1,3-heptadiène, 3-méthyl-1,3-heptadiène, 1,3-octadiène, 3- butyl-1,3- octadiène, 3,4-diméthyl -1, 3-hexadiène, 4,5-diéthyl-1,3-octadiène, phényl-1,3-butadiène, 2,3-diéthyl-1,3-butadiène, 2,3-di-n-propyl-1,3- butadiène et 2-méthyl - 3-isopropyl-1,3-butadiène ; le diène conjugué est de préférence choisi dans le groupe constitué par le 1,3-butadiène, l'isoprène et le pipérylène, le diène conjugué étant de préférence le 1,3-butadiène.

8. Méthode selon l'une des revendications 1 à 7, **caractérisée par le fait que** le composant halogéné est choisi dans le groupe constitué par le chlorure de diméthylaluminium, chlorure de diéthylaluminium, chlorure de diisobutylaluminium, bromure de diméthylaluminium, bromure de diéthylaluminium, bromure de diisobutylaluminium, fluorure de diméthylaluminium, fluorure de diéthylaluminium, fluorure de diisobutylaluminium, iodure de diméthylaluminium, iodure de diéthylaluminium, iodure de diisobutylaluminium, dichlorure de méthylaluminium, dichlorure d'éthylaluminium, dibromure de méthylaluminium, dibromure d'éthylaluminium, difluorure de méthylaluminium, difluorure d'éthylaluminium, sesquichlorure de méthylaluminium, sesquichlorure d'éthylaluminium, sesquichlorure d'isobutylaluminium, chlorure de triméthylétain, bromure de triméthylstannane, chlorure de triéthylstannane, bromure de triéthylstannane, dichlorure de di -tert-butylstannane, dibromure de di -tert-butylstannane, dichlorure de dibutylstannane, dibromure de dibutylstannane, chlorure de tributylstannane et bromure de tributylstannane ; le composant halogéné du système catalytique est de préférence choisi dans le groupe constitué par le sesquichlorure d'éthylaluminium, le dichlorure d'éthylaluminium, l'iodure de diéthylaluminium et le chlorure de diéthylaluminium ; le composant halogéné du système catalytique est de préférence choisi dans le groupe constitué par le sesquichlorure d'éthylaluminium, l'iodure de diéthylaluminium et le chlorure de diéthylaluminium.

9. Méthode selon l'une quelconque des revendications 1 à 8, **caractérisée par le fait que** le solvant organique est choisi dans le groupe constitué par les hydrocarbures aliphatiques, les hydrocarbures alicycliques, les mono-oléfines, les hydrocarbures aromatiques et leurs mélanges, de préférence le solvant organique est choisi dans le groupe constitué par le butane, le pentane, l'hexane, l'heptane, le cyclopentane, le cyclohexane, le 1-butène, le 2-butène, le benzène, le toluène, le xylène, et leurs mélanges, cyclohexane, 1-butène, 2-butène, benzène, toluène, xylène et leurs mélanges, de préférence le solvant organique est choisi dans le groupe constitué d'un mélange cyclohexane:hexane et d'un mélange cyclohexane:nefras, dans lequel le rapport des composants est respectivement de (30-55)÷(70-45).

10. Méthode selon l'une quelconque des revendications 1, **caractérisée par le fait que**, dans le complexe catalytique, le rapport molaire du composé lanthanide : composé organoaluminium : diène conjugué : composant halogéné est de 1 : (8-30) : (5-30) : (1,5-3,0), de préférence 1 : (8-20) : (5-20) : (1,8 - 2,8), de préférence encore 1 : (10 -15) : (10-15) : (2,1-2,5).

11. Procédé selon l'une quelconque des revendications 1 à 10, **caractérisé par le fait que** le polybutadiène maléinisé de faible poids moléculaire est un adduit d'anhydride maléique et de polybutadiène, dans lequel l'adduit comprend de 4 à 24 % en poids, de préférence de 5 à 20 % en poids, de préférence encore de 5 à 15 % en poids, de préférence encore de 5 à 13 % en poids, de préférence encore de 5 à 20 % en poids, de préférence encore de 5 à 15 % en poids. %, de préférence de 5 à 13 % en poids de groupes d'anhydride maléique par rapport au poids total du polybutadiène maléinisé et a un poids moléculaire de 1200 à 15000 g/mol, de préférence de 2000 à 10000 g/mol, de préférence de 2000 à 7000 g/mol, et de préférence de 2500 à 5500 g/mol.

12. Procédé selon l'une quelconque des revendications 1 à 11, **caractérisé en ce que** le silicate oligomérique est choisi parmi les composés de formule générale :
X₃-Si-(O-SiX₂)ₙ-X, où X est un groupe alcoxy de formule OR, où R est un résidu hydrocarboné aliphatique saturé ou insaturé comprenant de 1 à 30 atomes de carbone, un résidu hydrocarboné cycloaliphatique comprenant de 5 à 30 atomes de carbone, ou un résidu hydrocarboné aromatique comprenant de 6 à 30 atomes de carbone, et n est un nombre entier supérieur à 0, de préférence supérieur à 1, en particulier supérieur à 2, de préférence le silicate oligomérique est choisi parmi les composés ayant les formules générales suivantes :
(RO)₃Si-O-Si(OR)₃,
(RO)₃Si-O-Si(OR)₂- O-Si (OR)₃,
(RO)₃Si-O-Si(OR)₂- O-Si (OR)₂-O-Si(OR)₃,
(RO)₃Si-O-Si(OR)₂- O-Si (OR)₂-O-Si(OR)_{2O-Si}(OR)₃,
(RO)₃Si-O-Si(OR)₂-O-Si(OR)₂-O-Si(OR)₂-O-Si(OR)₂-O-Si(OR)₂-O-Si(OR)₃
ou
(RO)₃Si-O-Si(OR)₂-O-Si(OR)₂-O-Si(OR)₂-O-Si(OR)₂-O-Si(OR)_{2 -} O - Si (OR)₃,
où le radical R est méthyle, éthyle, vinyle, propyle, isopropyle, butyle, isobutyle, pentyle, isopentyle, hexyle, isohexyle, octyle ou isooctyle, de préférence le silicate oligomérique est choisi dans le groupe constitué par le polysilicate d'éthyle de formule (OEt)₃- Si- (O-Si (OEt)₂ )ₙ-OEt, où n est un nombre entier de 2 à 3 et la teneur en SiO₂ est de 40 à 42% ; les vinylsilanes oligomères ; le siloxane oligomère comprenant des groupes vinyle et méthoxy, avec une teneur en _{SiO2} de 54% ; le siloxane oligomère comprenant des groupes vinyle et éthoxy, avec une teneur en _{SiO2} de 45% ; et un siloxane oligomère comprenant des groupes vinyle, propyle et éthoxy.

13. Procédé selon l'une quelconque des revendications 1 à 12, **caractérisé par le fait que** les silicates oligomères de l'étape 4) sont ajoutés en une quantité allant de 0,01 à 50 g pour 1 kg de polymère, de préférence en une quantité allant de 0,5 à 10 g pour 1 kg de polymère.

14. Procédé selon l'une quelconque des revendications 1 à 13, **caractérisé par le fait que** la réaction du complexe catalytique préparé à l'étape 1) avec le polybutadiène maléinisé de faible poids moléculaire est effectuée en introduisant le polybutadiène maléinisé de faible poids moléculaire directement dans le complexe catalytique préparé ou en introduisant le polybutadiène maléinisé de faible poids moléculaire dans le stock de charge (solution de monomère) immédiatement avant l'alimentation du complexe catalytique.

15. Procédé selon l'une quelconque des revendications 1 à 14, **caractérisé par le fait que** la concentration de monomères dans le solvant est de 7 à 15 % en poids, de préférence de 9 à 13 % en poids.

16. Polydiène modifié produit par le procédé selon l'une quelconque des revendications 1-15, **caractérisé par** une viscosité Mooney de 37 à 45 unités Mooney arbitraires avant modification et de 40 à 66 unités Mooney arbitraires après modification, un indice de polydispersité compris entre 2,16 et 2,6, un écoulement à froid compris entre 5 et 40 mm/h, un niveau de plasticité compris entre 0,4 et 0,6, et une reprise élastique comprise entre 1,1 et 1,8 mm.

17. Polydiène modifié selon la revendication 16, qui est un polybutadiène.

18. Mélanges de caoutchouc à base de polydiènes selon l'une quelconque des revendications 16 à 17.
